# EUROPÄISCHE PATENTSCHRIFT

(11) **EP 2 729 405 B1**
(45) Veröffentlichungstag und Bekanntmachung des Hinweises auf die Patenterteilung: **19.08.2015**
(21) Anmeldenummer: 12734811.8
(22) Anmeldetag: 05.07.2012
(51) Int. Cl.: C01B 31/18, C01B 3/34, C01B 31/02

(54) **VERFAHREN ZUR SYNTHESEGASERZEUGUNG**
PROCESS FOR PRODUCTION OF SYNTHESIS GAS
PROCÉDÉ DE PRODUCTION DE GAZ DE SYNTHÈSE

(30) Priorität: 05.07.2011 DE 102011106642
(43) Veröffentlichungstag der Anmeldung: 14.05.2014
(73) Patentinhaber: Linde Aktiengesellschaft, 80331 München (DE); BASF SE, 67056 Ludwigshafen (DE)
(72) Erfinder: MASS, Hans-Jürgen, 01328 Dresden (DE); GÖKE, Volker, 82538 Geretsried (DE); MACHHAMMER, Otto, 68163 Mannheim (DE); GUZMANN, Marcus, 82541 Münsing (DE); SCHNEIDER, Christian, 68161 Mannheim (DE); HORMUTH, Wolfgang Alois, 67487 St Martin (DE); BODE, Andreas, 68163 Mannheim (DE); KLINGLER, Dirk, 68163 Mannheim (DE); KERN, Matthias, 76135 Karlsruhe (DE); KOLIOS, Grigorios, 67435 Neustadt (DE)
(74) Vertreter: Fischer, Werner
(86) Internationale Anmeldenummer: PCT/EP2012/002837
(87) Internationale Veröffentlichungsnummer: WO 2013/004391

(56) Entgegenhaltungen:
- EP-A2- 0 191 522
- US-A- 4 726 913
- US-A1- 2003 182 861
- US-A1- 2003 208 959

## Beschreibung

Die Erfindung betrifft ein Verfahren zur Erzeugung von Synthesegas, wobei Methan und Kohlendioxid in einen Reaktionsraum eingeleitet und in Gegenwart eines Feststoffes zu Wasserstoff und Kohlenmonoxid umgesetzt werden.

Unter Synthesegas ist ein aus Wasserstoff und Kohlenmonoxid bestehendes Stoffgemisch zu verstehen, das in einer Vielzahl von industriellen Prozessen als Basischemikalie eingesetzt werden kann. Synthesegas bietet die ideale Schnittstelle zu vorhandenen petrochemischen Verfahren für die Produktion von z.B. Methanol, Dimethylether oder Fischer-Tropsch Produkten.

Derartige Verfahren sind beispielsweise aus den Patentanmeldungen US2009203519 und US2011089378 bekannt. Beide Anmeldungen beschreiben Verfahren, bei denen Methan und Kohlendioxid über einen Katalysator geleitet und dabei durch Trockenreformierung umgesetzt werden. Aufgrund des Boudouard-Gleichgewichts sowie der thermischen Zersetzung von Methan entsteht Kohlenstoff, der sich unter anderem auf dem Katalysator absetzt und diesen vergiftet.

Um dieser Problematik zu begegnen, schlägt US2009203519 den Einsatz eines eisenhaltigen Abscheide-Katalysators vor, auf dem sich gebildeter Kohlenstoff ablagert. Die Aufnahmefähigkeit des Abscheide-Katalysators ist allerdings begrenzt, so dass in periodischen Abständen eine Katalysatorregeneration, beispielsweise mit Hilfe eines Fluids, durchgeführt werden muss. US2009203519 offenbart keine technische Lösung bezüglich der Wärmezufuhr für die stark endotherme Reformierungsreaktion.

US20110089378 beschreibt die Präparation von Katalysatoren wie beispielsweise BaCO₃-Ba₂TiO₄ (1:1)/NiO (catalystA), Sr₂TiO₄/NiO (catalyst B), BaCO₃-BaAl₂O₄ (2:1)/NiO sowie deren Anwendung bei der Trockenreformierung von Methan. Der über mindestens 8 Stunden verkokungsresistente Katalysator ist prinzipiell für die Realisierung einer kontinuierlichen Fahrweise geeignet. Diese Lösung ist allerdings mit dem Nachteil hoher Katalysatorkosten verbunden.

Aufgrund der beschriebenen Nachteile konnte bislang auf Basis des aufgeführten Stands der Technik keine großtechnische Produktion von Synthesegas durch die Umsetzung von Methan mit Kohlendioxid entwickelt werden.

Aufgabe der vorliegenden Erfindung ist es, ein Verfahren zur Synthesegasherstellung aufzuzeigen, das die Edukte Methan und Kohlendioxid verwendet. Ferner ist Aufgabe der Erfindung, einen gasförmigen Produktstrom zu erhalten; der im Wesentlichen frei von Feststoffpartikeln ist. Des Weiteren ist Aufgabe der Erfindung, eine kontinuierliche Fahrweise zur Synthesegasherstellung aufzuzeigen, bei der keine Katalysatorregeneration erforderlich ist.

Diese Aufgabe wird erfindungsgemäß dadurch gelöst, dass Methan und Kohlendioxid in Gegenwart eines kohlenstoffhaltigen Feststoffs umgesetzt werden, gemäß Anspruch 1.

Bevorzugt erfolgt die Umsetzung der Edukte Methan und Kohlendioxid bei Temperaturen zwischen 800 bis 1600°C und besonders bevorzugt zwischen 900 und 1400°C.

Erfindungsgemäß wird als kohlenstoffhaltiger Feststoff vorteilhaft ein kohlenstoffhaltiges Granulat eingesetzt.

Unter einem kohlenstoffhaltigen Granulat ist in der vorliegenden Erfindung ein Material zu verstehen, das vorteilhaft aus festen Körnern besteht, die mindestens 50 Gew.-%, bevorzugt mindestens 80 Gew.-%, insbesondere mindestens 90 Gew.-% Kohlenstoff aufweisen. Das kohlenstoffhaltige Granulat besitzt vorteilhaft eine Körnung, d.h. einen Äquivalenzdurchmesser, der durch Siebung mit einer bestimmten Maschengröße bestimmbar ist, von 0,5 bis 100 mm, bevorzugt von 1 bis 80 mm. Das kohlenstoffhaltige Granulat ist vorteilhaft kugelförmig. In dem erfindungsgemäßen Verfahren kann eine Vielzahl von unterschiedlichen kohlenstoffhaltigen Granulaten eingesetzt werden. Ein derartiges Granulat kann beispielsweise aus Kohle, Koks, Koksgrus und/oder Mischungen hieraus bestehen. Koksgrus weist in der Regel eine Körnung von kleiner 20 mm auf. Ferner kann das kohlenstoffhaltige Granulat 0 bis 15 Gew.-% bezogen auf die Gesamtmasse des Granulats, bevorzugt 0 bis 5 Gew.-%, Metall, Metalloxid und/oder Keramik enthalten. Mit besonderem Vorzug werden Granulate eingesetzt, die Koksgrus und/oder geringwertigen, d.h. nicht direkt für den Verhüttungsprozess geeigneten Koks, Kokereikoks auf Braun- oder Steinkohlebasis und/oder aus Biomasse gewonnenen Koks umfassen.

Vorteilhaft wird die 1- bis 3-fache Masse an kohlenstoffhaltigem Feststoff im Vergleich zur Masse des produzierten Synthesegases eingesetzt, bevorzugt die 1,8- bis 2,5-fache Masse.

Der durch die erfindungsgemäße Reaktion gebildete Kohlenstoff lagert sich vorteilhaft zu mindestens 90 Gew.-% bezogen auf die gesamte Masse des gebildeten Kohlenstoffs und bevorzugt zu mindestens 95 Gew.-% an den kohlenstoffhaltigen Feststoff, insbesondere an das kohlenstoffhaltige Granulat an.

Vorteilhaft weist der gasförmige Produktstrom einen Feststoffgehalt von weniger als 10 mg Feststoff/g Gas, bevorzugt von weniger als 5 mg Feststoff/g Gas, insbesondere von weniger als 1 mg Feststoff/g Gas auf.

Bei der Durchführung des erfindungsgemäßen Verfahrens stellt entstehender Kohlenstoff kein Problem dar, da er sich vorwiegend auf dem kohlenstoffhaltigen Feststoff ablagert und lediglich dessen Größe, Struktur und Festigkeit ändert. Insbesondere kohlenstoffhaltiges Granulat filtert Kohlenstoff aus der Gasphase heraus, so dass das erzeugte Synthesegas weitgehend frei von Kohlenstoffpartikeln aus dem Reaktionsraum abgezogen werden kann. Eine Ausgestaltung des erfindungsgemäßen Verfahrens macht sich den Mechanismus der Kohlenstoffabscheidung zunutze, indem die gasförmigen Einsatzstoffe mit einem atomaren Kohlenstoff/Sauerstoff-Verhältnis C/O > 1 in den Reaktionsraum eingebracht werden, so dass neben Synthesegas gezielt Kohlenstoff erzeugt und auf dem kohlenstoffhaltigen Feststoff abgeschieden wird. Andererseits kann Kohlenstoff von dem Feststoff abgetragen werden, wenn ein Kohlenstoff/ Sauerstoff-Verhältnis C/O < 1 eingestellt wird. Auf diese Weise ist es beispielsweise möglich, aus einem minderwertigen Granulat durch gezielte Einstellung der Dichte im Bereich von 0,7 bis 1,4 g/cm³, bevorzugt von 0,8 bis 1,4 g/cm³ ein hochwertiges Koks-Produkt zu erzeugen, das aus dem Reaktionsraum abgezogen und beispielsweise im Hochofen eingesetzt werden kann.

Eine bevorzugte Ausgestaltung sieht vor, dass für die Durchführung des erfindungsgemäßen Verfahrens erforderliche thermische Energie durch Oxidation oder partielle Oxidation eines Brennstoffs erzeugt wird, der Kohlenwasserstoffe und/oder Wasserstoff umfasst. Als Oxidationsmittel werden vorzugsweise Luft und/oder mit Sauerstoff angereicherte Luft und/oder technisch reiner Sauerstoff verwendet. Oxidation oder partielle Oxidation können außerhalb des Reaktionsraums durchgeführt werden, wozu der Brennstoff mit einem Oxidationsmittel gemischt und zur Reaktion gebracht wird. Das entstehende heiße Gas wird nachfolgend in den Reaktionsraum eingeleitet und über den kohlenstoffhaltigen Feststoff geführt, wobei es einen Teil seiner fühlbaren Wärme an den kohlenstoffhaltigen Feststoff und/oder die umzusetzenden Gase abgibt. Das Oxidationsmittel kann jedoch auch in den Reaktionsraum eingeleitet und dort mit einem vorliegenden Brennstoff vermischt und zur Reaktion gebracht werden. Umfasst der kohlenstoffhaltige Feststoff geringwertigen Kokereikoks auf Braunkohle-, Steinkohle- oder Biomassebasis, aus dem bei erhöhter Temperatur Pyrolysegase austreten können, so ist zur Energiegewinnung vorgesehen, im Anschluss an die Pyrolysezone Sauerstoff einzuspeisen und die Pyrolysegase zumindest partiell zu oxidieren.

In einer anderen Ausgestaltung wird ein heißes Gas mit Hilfe einer außerhalb des Reaktionsraums angeordneten elektrischen Heizeinrichtung erzeugt, durch die ein Gasstrom geführt und dabei mit Hilfe eines Lichtbogens erhitzt wird, bevor er mit einer Temperatur zwischen 3000 K und 10000 K, bevorzugt zwischen 4000 K und 10000 K in die Hochtemperaturzone eingeleitet wird und dort seine Wärme an den oder die Reaktanden abgibt. Der Gasstrom kann beispielsweise aus bei der Kohlenwasserstoffzersetzung gewonnenem Wasserstoff bestehen, der aus dem Reaktionsraum abgezogen und nach eventueller Reinigung (z. B. Entstaubung) der elektrischen Heizeinrichtung zugeleitet und zumindest teilweise ionisiert wird.

Eine weitere bevorzugte Ausgestaltung des erfindungsgemäßen Verfahrens sieht vor, dass thermische Energie im Reaktionsraum durch elektromagnetische Induktion erzeugt wird. Im Reaktionsraum sind hierzu ein oder mehrere elektrisch leitfähige Elemente so angeordnet, dass sie mit den umzusetzenden Gasen und/oder dem kohlenstoffhaltigen Feststoff in thermische Verbindung treten können. Über ein elektromagnetisches Wechselfeld werden Wirbelströme in den elektrisch leitfähigen Elementen erzeugt, die sich dadurch aufheizen. Die auf diese Weise erzeugte Wärme überträgt sich direkt oder indirekt auf die umzusetzenden Gase und deckt somit wenigstens teilweise den für die Synthesegasbildung erforderlichen Energiebedarf. Das oder die elektrisch leitfähigen Elemente werden fest im Reaktionsraum angeordnet und/oder in granularer Form im kohlenstoffhaltigen Feststoff, insbesondere in einem kohlenstoffhaltigen Granulat, verteilt, so dass sie gemeinsam mit diesem in den Reaktionsraum eingebracht und aus dem Reaktionsraum entfernt werden. Alternativ kann die Impedanz des kohlenstoffhaltigen Feststoffs zur direkten induktiven Beheizung genutzt werden.

Vorstellbar ist es auch, thermische Energie im Reaktionsraum über einen elektrischen Strom zu erzeugen, der durch den kohlenstoffhaltigen Feststoff geleitet wird und diesen erhitzt.

Die bereitzustellende Energie des erfindungsgemäßen Verfahrens beträgt pro Mol umgesetztes Methan nicht mehr als 150 kJ, vorteilhaft nicht mehr als 120 kJ, bevorzugt nicht mehr als 100 kJ.

Die erfindungsgemäße thermische Zersetzungsreaktion von Kohlenwasserstoffen wird vorteilhaft bei einem Druck, der zwischen Atmosphärendruck und 50 bar, bevorzugt zwischen 10 und 50 bar liegt, durchgeführt.

Die Verweilzeit in der Reaktionszone bei der erfindungsgemäßen Zersetzungsreaktion beträgt vorteilhaft 0,5 Sekunden bis 25 Minuten, bevorzugt 1 bis 60 Sekunden, insbesondere 1 bis 30 Sekunden.

Der kohlenstoffhaltige Feststoff, insbesondere das kohlenstoffhaltige Granulat, wird als Wanderbett durch den Reaktionsraum geführt, wobei Methan und Kohlendioxid zweckmäßigerweise im Gegenstrom zu dem Feststoff geleitet werden. Der Reaktionsraum ist hierfür sinnvollerweise als senkrechter Schacht ausgeführt, so dass die Bewegung des Wanderbetts alleine unter Wirkung der Schwerkraft zustande kommt. Das Wanderbett ist vorteilhaft homogen und gleichmäßig durchströmbar. Das Wanderbett erlaubt eine kontinuierliche oder quasi-kontinuierliche Betriebsweise.

Eine besonders bevorzugte Variante des erfindungsgemäßen Verfahrens sieht vor, dass der kohlenstoffhaltige Feststoff mit Umgebungstemperatur in den Reaktionsraum eingeleitet, dort zunächst bis auf eine Maximaltemperatur aufgeheizt und anschließend wieder abgekühlt wird, wobei die Maximaltemperatur in einer Hochtemperaturzone liegt, in der Temperaturen im Bereich von 1000°C herrschen. Die Abkühlung kann bis maximal 500 K, bevorzugt bis 300 K noch mehr bevorzugt bis 50 K oberhalb der Umgebungstemperatur durchgeführt werden, so dass eine Kühlung bzw. Löschung des aus dem Reaktionsraum abgezogenen kohlenstoffhaltigen Feststoffs nicht erforderlich ist. Zur Ausbildung und Aufrechterhaltung des beschriebenen Temperaturprofils wird vorgeschlagen, ein Methan und Kohlendioxid enthaltendes Gasgemisch mit Umgebungstemperatur in den Reaktionsraum einzuleiten und im Gegenstrom durch das Wanderbett zu führen. Auf seinem Weg durch den Reaktionsraum tauscht das Gasgemisch in direktem Kontakt mit dem Wanderbett Wärme aus, wobei das Gasgemisch bis auf ca. 1000°C aufgeheizt und das Wanderbett gleichzeitig abgekühlt wird. In der Hochtemperaturzone gebildetes heißes Synthesegas wird weiter im Gegenstrom durch das Wanderbett geführt und in direktem Wärmetausch mit diesem abgekühlt, so dass Wasserstoff und Kohlenmonoxid mit einer Temperatur in der Nähe der Umgebungstemperatur aus dem Reaktionsraum abgezogen werden können. Durch die hohe energetische Integration können die aus dem Verzicht auf einen speziellen, hochaktiven Katalysator entstehenden Nachteile hinsichtlich des Gesamtenergiebedarfs ausgeglichen werden. Für die Synthesegaserzeugung erforderliche thermische Energie wird insbesondere in der Hochtemperaturzone erzeugt und/oder in die Hochtemperaturzone eingebracht. Die Erzeugung und/oder Einbringung von thermischer Energie an anderen Stellen des Reaktionsraumes soll jedoch nicht ausgeschlossen werden.

Das in der Hochtemperaturzone gebildete Synthesegas ist möglichst rasch abzukühlen, wodurch die Boudouard-Reaktion und die Methanisierung effektiv unterdrückt werden können, bei denen einerseits aus Kohlenmonoxid, Kohlendioxid und Kohlenstoff und andererseits aus Wasserstoff und Kohlenstoff oder aus Wasserstoff und Kohlenmonoxid Methan gebildet werden. Unter Umständen reicht der Mengenstrom, mit dem das Wanderbett durch die Hochtemperaturzone geführt wird, hierzu nicht aus. In diesem Fall sieht die Erfindung einen aus kohlenstoffhaltigem Granulat gebildeten Kreislauf vor, durch den ein Teil des in der Hochtemperaturzone gebildeten Synthesegases im Gegenstrom geführt und dabei abgekühlt wird. Ebenenfalls möglich ist der Einsatz eines Wärmerohres, über das Wärme aus dem Synthesegas abgeführt wird. Sowohl die über den Granulatkreislauf als auch über das Wärmerohr abgeführte Wärme kann zur Vorwärmung von Einsatzstoffen genutzt werden.

Die Körner, aus denen das aus dem Reaktionsraum abgezogene kohlenstoffhaltige Granulat besteht, streuen in ihrer Korngröße und in ihrer Dichte, so dass eine direkte Verwertung des Granulats, beispielsweise als Hochofenkoks, bei dem eine Korngröße zwischen 35 und 80 mm gefordert wird, nicht möglich ist. Erfindungsgemäß ist daher vorgesehen, das aus dem Reaktionsraum abgezogene kohlenstoffhaltige Granulat durch Siebung und/oder Sichtung zu klassieren. Körner, die innerhalb der geforderten Spezifikation liegen, werden als Produkt ausgetragen. Körner, deren Durchmesser zu klein oder deren Dichte zu niedrig für den beabsichtigten Einsatzzweck sind, werden vorzugsweise wieder in den gleichen oder einen parallel betriebenen Reaktionsraum zurückgeführt. Körner mit zu großen Durchmessern werden vor ihrer Rückführung gebrochen, und der Feinanteil wird zurückgeführt.

Zur Erzeugung eines hochreinen Synthesegases kann es erforderlich sein, die in den Reaktionsraum einzuleitenden Stoffströme von Substanzen zu reinigen, die selbst im Synthesegas unerwünscht sind oder die im Reaktionsraum in unerwünschte Substanzen umgesetzt werden können. Zusätzlich oder alternativ können unerwünschte Substanzen auch aus den aus dem Reaktionsraum abgezogenen Gasen abgetrennt werden. Zu den unerwünschten Substanzen gehören beispielsweise Schwefelverbindungen, ein- oder mehrringige Aromaten, wie beispielsweise Benzol, Toluol, Xylol und/oder Naphthalin sowie andere Kohlenwasserstoffe, die u. a. in Erdgas enthalten sein können.

Eine Ausgestaltung des erfindungsgemäßen Verfahrens sieht daher vor, dass ein im Verfahren auftretendes Gas zur Reinigung durch ein Koksbett geleitet und dabei von Substanzen befreit wird, die selbst im Synthesegas unerwünscht sind oder im Reaktionsraum in unerwünschte Substanzen umgesetzt werden können. Abhängig von seiner Qualität kann der bei der Gasreinigung mit unerwünschten Substanzen beladene Koks durch Verbrennung entsorgt oder einer Kokerei als Einsatz zugeführt werden.

Das erfindungsgemäße Verfahren eignet sich insbesondere zur Umsetzung von Erdgas zu Synthesegas, wobei in Abhängigkeit von der Erdgaslagerstätte der Methananteil im Erdgas typischerweise zwischen 75 und 99 % der molaren Faktion liegt. Kohlendioxid und Erdgas können hierbei gemeinsam oder getrennt an mindestens einer Stelle in den Reaktionsraum eingeleitet werden. Jedoch ist auch die Umsetzung von Kuppelgasen wie Koksofengas und/oder Konvertergas und/oder Gasen aus Kupolöfen möglich, die sowohl Methan als auch Kohlendioxid enthalten. Insbesondere geeignet sind Gichtgase aus Kupolöfen, die mit technisch reinem Sauerstoff oder mit Luft betrieben werden, die mit Sauerstoff angereichert ist Wegen seines geringen Stickstoffgehalts weist das hierbei erhaltene Gichtgas höhere Anteile an Kohlenmonoxid und Kohlendioxid auf.

Bei der Durchführung des erfindungsgemäßen Verfahrens kann im Gegensatz zum Stand der Technik ein Synthesegas ohne nennenswerte Feststoffbelastung hergestellt werden.

Obwohl die erfindungsgemäßen Temperaturbereiche oberhalb der im Stand der Technik genannten Bereiche liegen, stellt dies keinen wirtschaftlichen Nachteil dar, da die hier beschriebene erfindungsgemäße Verfahrensvariante einen zuvor nicht erreichten Grad der Wärmerückgewinnung beinhaltet.

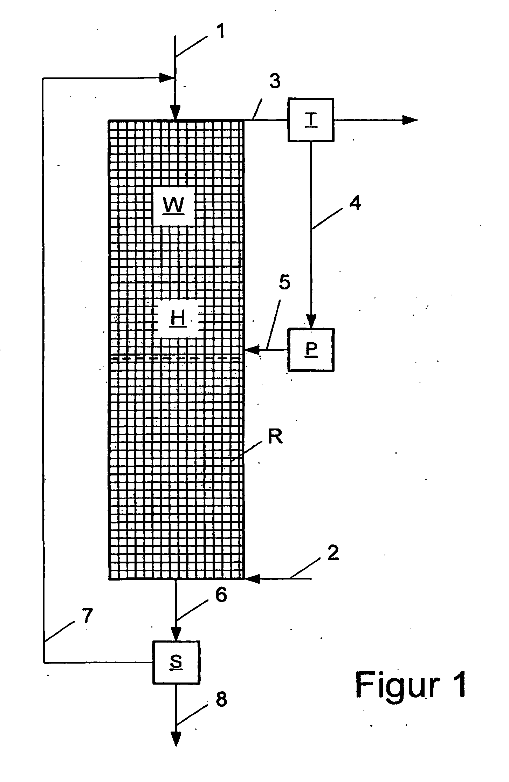

Im Folgenden soll die Erfindung anhand eines in der Figur 1 schematisch dargestellten Ausführungsbeispiels näher erläutert werden.

Die Figur 1 zeigt eine Variante des erfindungsgemäßen Verfahrens, bei dem Methan und Kohlendioxid in einem kontinuierlichen Prozess zu Synthesegas und einem Kohlenstoffsprodukt, beispielsweise Einblaskohle für einen Hochofen, umgesetzt werden.

Über die Zuführung 1 wird ein kohlenstoffhaltiges Granulat, bei dem es sich beispielsweise um Koksgrus handelt, mit Umgebungstemperatur von oben in den Reaktionsraum R eingeleitet, durch den es nachfolgend unter Wirkung der Schwerkraft in einem Wanderbett W nach unten geführt wird. Ein Methan enthaltendes Gas 2, bei dem es sich beispielsweise um ein Gemisch aus Erdgas und Kohlendioxid handelt, wird gleichzeitig von unten in den Reaktionsraum R geleitet und im Gegenstrom durch das Wanderbett W nach oben geführt. Das Gas 2, das bei seinem Eintritt in den Reaktionsraum R Umgebungstemperatur aufweist, wird auf seinem Weg nach oben in direktem Wärmetausch mit dem Wanderbett W aufgeheizt. In der Hochtemperaturzone H, in der Temperaturen von mehr als 1000°C herrschen, reagieren in erster Linie Methan und Kohlendioxid zu Wasserstoff und Kohlenmonoxid, wodurch ein Synthesegas gebildet wird. Durch thermische Zersetzung von Methan und die Boudouard-Reaktion wird jedoch auch Kohlenstoff gebildet, der sich zu mehr als 95 % an die kohlenstoffhaltigen Körner des Wanderbetts W anlagert. Das gebildete heiße Synthesegas strömt weiter nach oben, wobei es in direktem Wärmetausch mit dem Wanderbett W abgekühlt wird, so dass über Leitung 3 Synthesegas mit einer Temperatur abgezogen werden kann, die oberhalb der Umgebungstemperatur, aber mindestens 500 K unter der Reaktionstemperatur liegt. In der Trenneinrichtung T wird Wasserstoff 4 aus dem Synthesegas abgetrennt, der nachfolgend in der elektrischen Heizeinrichtung P mit Hilfe eines Lichtbogens in ein heißes Gas 5 umgesetzt wird. Mit einer Temperatur zwischen 3000 und 10000 K wird das heiße Gas 5 in die Hochtemperaturzone H eingeleitet und stellt dort die für die Synthesegaserzeugung benötigte Energie bereit. Am unteren Ende des Reaktionsraums R wird Granulat 6 abgezogen, das aufgrund der Anlagerungen mit hohem Kohlenstoffgehalt und geringen Asche- und Schwefelgehalt beispielsweise als Kokereizuschlagsstoff oder Aufkohlungsmittel von legiertem Gusseisen in Gießereien eingesetzt werden kann. Bestandteile des Granulats 6, die die Qualitätsanforderungen nicht erfüllen, weil sie einen zu großen oder zu kleinen Durchmesser oder beispielsweise eine zu niedrige Dichte aufweisen, werden in der Trenneinrichtung S durch Siebung und/oder Sichtung abgetrennt und nach einer eventuellen Zerkleinerung über Leitung 7 wieder in den Reaktionsraum R zurückgeführt. Bei dem verbleibenden Rest 8 handelt es sich um Hochofenkoks, der als hochwertiges Produkt abgegeben wird.

## Patentansprüche

1. Verfahren zur Erzeugung von Synthesegas, wobei Methan und Kohlendioxid in einen Reaktionsraum eingeleitet und in einem kohlenstoffhaltigen Feststoffbett zu Wasserstoff und Kohlenmonoxid umgesetzt werden, **dadurch gekennzeichnet, dass** das kohlenstoffhaltige Feststoffbett als Wanderbett durch den Reaktionsraum geführt wird, wobei im Reaktionsraum gebildetes Synthesegas im Gegenstrom zu dem Wanderbett geleitet und dabei in direktem Wärmetausch mit dem kohlenstoffhaltigen Feststoff abgekühlt wird.

2. Verfahren nach Anspruch 1, **dadurch gekennzeichnet**, däss Methan und Kohlendioxid bei Temperaturen zwischen 800 bis 1600°C und besonders bevorzugt zwischen 900 und 1400°C umgesetzt werden.

3. Verfahren nach einem der Ansprüche 1 oder 2, **dadurch gekennzeichnet, dass** als kohlenstoffhaltiger Feststoff ein kohlenstoffhaltiges Granulat eingesetzt wird, das mindestens 80 Gew.-% Kohlenstoff und eine Körnung von 0,1 bis 100 mm aufweist.

4. Verfahren nach einem der Ansprüche 1 bis 3, **dadurch gekennzeichnet, dass** das Sauerstoff/Kohlenstoff-Verhältnis der gasförmigen Einsatzstoffe gezielt so eingestellt wird, dass Kohlenstoff im Reaktionsraum gebildet oder von dem kohlenstoffhaltigen Feststoff abgetragen wird.

5. Verfahren nach einem der Ansprüche 1 bis 4, **dadurch gekennzeichnet, dass** wenigstens ein Teil der für die Synthesegaserzeugung erforderlichen thermischen Energie im Reaktionsraum erzeugt und/oder über ein heißes Gas in den Reaktionsraum eingebracht wird.

6. Verfahren nach einem der Ansprüche 1 bis 5, **dadurch gekennzeichnet, dass** der kohlenstoffhaltige Feststoff als Wanderbett kontinuierlich durch den Reaktionsraum geführt wird.

7. Verfahren nach einem der Ansprüche 1 bis 6, **dadurch gekennzeichnet, dass** im Reaktionsraum gebildetes Synthesegas über einen aus kohlenstoffhaltigem Granulat gebildeten Kreislauf gekühlt wird.

8. Verfahren nach einem der Ansprüche 1 bis 7, **dadurch gekennzeichnet, dass** im Reaktionsraum gebildetes Synthesegas über ein Wärmerohr abgekühlt wird.

9. Verfahren nach einem der Ansprüche 1 bis 8, **dadurch gekennzeichnet, dass** als kohlenstoffhaltiger Feststoff ein Granulat aus geringwertigem Kokereikoks und/oder Koksgrus auf Basis von hochporöser Braun- oder Steinkohle und/oder aus Biomasse gewonnenem Koks eingesetzt wird.

10. Verfahren nach einem der Ansprüche 3 bis 9, **dadurch gekennzeichnet, dass** ein Teil des aus dem Reaktionsraum abgezogenen kohlenstoffhaltigen Granulats wieder in den Reaktionsraum zurückgeführt wird.

11. Verfahren nach einem der Ansprüche 1 bis 10, **dadurch gekennzeichnet, dass** Erdgas und/oder Koksofengas und/oder Konvertergas und/oder Gichtgas aus Kupol- oder Hochöfen an mindestens einer Stelle in den Reaktionsraum eingeleitet und zu Synthesegas umgesetzt werden.

12. Verfahren nach einem der Ansprüche 1 bis 11, **dadurch gekennzeichnet, dass** ein im Verfahren auftretendes Gas zur Reinigung von unerwünschten Substanzen durch ein Koksbett geleitet wird.

13. Verfahren nach einem der Ansprüche 1 bis 12, **dadurch gekennzeichnet, dass** das Verfahren kontinuierlich durchgeführt wird.

## Claims

1. Process for producing synthesis gas, where methane and carbon dioxide are introduced into a reaction chamber and reacted in a carbon-containing solid bed to give hydrogen and carbon monoxide, **characterized in that** the carbon-containing solid bed as a moving bed is guided through the reaction chamber, wherein synthesis gas formed in the reaction chamber is led in countercurrent to the moving bed and is cooled here in direct heat exchange with the carbon-containing solid.

2. Process according to Claim 1, **characterized in that** methane and carbon dioxide are reacted at temperatures between 800 to 1600°C and more preferably between 900 and 1400°C.

3. Process according to either of Claims 1 and 2, **characterized in that** use is made as carbon-containing solid of carbon-containing granules comprising at least 80% by weight carbon and having a grain size of 0.1 to 100 mm.

4. Process according to any of Claims 1 to 3, **characterized in that** the oxygen/carbon ratio of the gaseous reactants is set specifically such that carbon is formed in the reaction chamber or removed from the carbon-containing solid.

5. Process according to any of Claims 1 to 4, **characterized in that** at least some of the thermal energy required for synthesis gas production is generated in the reaction chamber and/or introduced into the reaction chamber via a hot gas.

6. Process according to any of Claims 1 to 5, **characterized in that** the carbon-containing solid as a moving bed is guided continuously through the reaction chamber.

7. Process according to any of Claims 1 to 6, **characterized in that** synthesis gas formed in the reaction chamber is cooled via a circuit formed from carbon-containing granules.

8. Process according to any of Claims 1 to 7, **characterized in that** synthesis gas formed in the reaction chamber is cooled via a heat-exchange tube.

9. Process according to any of Claims 1 to 8, **characterized in that** use is made as carbon-containing solid of granules of low-grade coking-plant coke and/or coke breeze based on highly porous brown coal or bituminous coal and/or on coke obtained from biomass.

10. Process according to any of Claims 3 to 9, **characterized in that** some of the carbon-containing granules removed from the reaction chamber are returned to the reaction chamber.

11. Process according to any of Claims 1 to 10, **characterized in that** natural gas and/or coking-oven gas and/or converter gas and/or furnace gas from cupola furnaces or blast furnaces are introduced at at least one location into the reaction chamber and are reacted to give synthesis gas.

12. Process according to any of Claims 1 to 11, **characterized in that** a gas which occurs in the process is cleaned of unwanted substances by being passed through a coke bed.

13. Process according to any of Claims 1 to 12, **characterized in that** the process is carried out continuously.

## Revendications

1. Procédé de production de gaz de synthèse, du méthane et du dioxyde de carbone étant guidés dans un espace de réaction et transformés dans un lit solide contenant du carbone en hydrogène et en monoxyde de carbone, **caractérisé en ce que** le lit solide contenant du carbone est guidé en tant que lit mouvant au travers de l'espace de réaction, le gaz de synthèse formé dans l'espace de réaction étant guidé à contre-courant par rapport au lit mouvant et ainsi refroidi en échange thermique direct avec le solide contenant du carbone.

2. Procédé selon la revendication 1, **caractérisé en ce que** le méthane et le dioxyde de carbone sont transformés à des températures entre 800 et 1600°C et de manière particulièrement préférée entre 900 et 1400°C.

3. Procédé selon l'une quelconque des revendications 1 ou 2, **caractérisé en ce qu'**on utilise, comme solide contenant du carbone, un granulat contenant du carbone qui présente au moins 80% en poids de carbone et une granulométrie de 0,1 à 100 mm.

4. Procédé selon l'une quelconque des revendications 1 à 3, **caractérisé en ce que** le rapport oxygène/carbone des substances gazeuses de départ est réglé de manière ciblée de telle sorte que le carbone est formé dans l'espace de réaction ou évacué par le solide contenant du carbone.

5. Procédé selon l'une quelconque des revendications 1 à 4, **caractérisé en ce qu'**au moins une partie de l'énergie thermique nécessaire pour la production de gaz de synthèse est générée dans l'espace de réaction et/ou introduite via un gaz chaud dans l'espace de réaction.

6. Procédé selon l'une quelconque des revendications 1 à 5, **caractérisé en ce que** le solide contenant du carbone est guidé en continu sous forme de lit mouvant au travers de l'espace de réaction.

7. Procédé selon l'une quelconque des revendications 1 à 6, **caractérisé en ce que** le gaz de synthèse formé dans l'espace de réaction est refroidi via un circuit formé du granulat contenant du carbone.

8. Procédé selon l'une quelconque des revendications 1 à 7, **caractérisé en ce que** le gaz de synthèse formé dans l'espace de réaction est refroidi via un caloduc.

9. Procédé selon l'une quelconque des revendications 1 à 8, **caractérisé en ce qu'**on utilise, comme solide contenant du carbone, un granulat de coke de cokerie et/ou de poussier de coke de peu de valeur à base de lignite ou d'anthracite hautement poreux et/ou de coke obtenu à partir de biomasse.

10. Procédé selon l'une quelconque des revendications 3 à 9, **caractérisé en ce qu'**une partie du granulat contenant du carbone évacué de l'espace de réaction est à nouveau recyclée dans l'espace de réaction.

11. Procédé selon l'une quelconque des revendications 1 à 10, **caractérisé en ce que** du gaz naturel et/ou du gaz de four à coke et/ou du gaz de convertisseur et/ou du gaz de haut-fourneau provenant d'un cubilot ou d'un haut-fourneau sont introduits en au moins un site dans l'espace de réaction et transformés en gaz de synthèse.

12. Procédé selon l'une quelconque des revendications 1 à 11, **caractérisé en ce qu'**un gaz produit dans le procédé est guidé au travers d'un lit de coke en vue de l'épuration de substances non souhaitées.

13. Procédé selon l'une quelconque des revendications 1 à 12, **caractérisé en ce que** le procédé est réalisé en continu.
